# EUROPEAN PATENT SPECIFICATION

(11) **EP 1 430 612 B1**
(45) Date of publication and mention of the grant of the patent: **08.09.2010**
(21) Application number: 02765256.9
(22) Date of filing: 13.09.2002
(51) Int. Cl.: H04B 1/48

(54) **RF SIGNAL SWITCH FOR A WIRELESS COMMUNICATION DEVICE**
HF-SCHALTER FÜR EINE DRAHTLOSE KOMMUNIKATIONSVORRICHTUNG
COMMUTATEUR DE SIGNAL RF POUR UN DISPOSITIF DE COMMUNICATION SANS FIL

(30) Priority: 18.09.2001 EP 01203528
(43) Date of publication of application: 23.06.2004
(73) Proprietor: NXP B.V., 5656 AG Eindhoven (NL)
(72) Inventor: JEDELOO, Pieter, W., NL-5656 AA Eindhoven (NL)
(74) Representative: Williamson, Paul Lewis
(86) International application number: PCT/IB2002/003794
(87) International publication number: WO 2003/026156

(56) References cited:
- WO-A-01/45285
- DE-A- 3 506 817
- US-B1- 6 249 670

## Description

The invention relates to a RF signal switch circuit device and a wireless communication device for wireless communication applications, in particular a RF signal switch circuit device for cellular wireless communication applications and a wireless communication device for cellular applications.

RF power modules for GSM/DCS/PCS cellular communication have a transmit/receive switch function and are provided at the front end of the communication system.

From JP 6139701 A, a hybrid integrated signal switch circuit is known which comprises an I/O terminal for the received/transmitted signal, a Tx input terminal, a Rx output terminal, Tx and Rx being connected to the I/O terminal, and a resonator for isolating Tx from Rx. To reduce the deterioration in isolation between the terminals Tx an Rx and to reduce insertion loss, a part of a main line of a strip line is cut off, and an electrode equipotential is added to a sub line between the edge resulting from the cut and opposed main lines on the main line axis, connecting a semiconductor active element placed on the electrode to both ends of the main line with a metallic wire. In this known circuit, integration is the objective since now the circuits connected to Tx and Rx are separated by the main line of the system.

DE 3506817 A1 refers to a transmitter-receiver circuit for communication purposes, the isolation means of this circuit having a comparatively low insertion loss. An inductor is provided between the antenna and ground, and a coupling capacitor is provided between the antenna and a high ohmic Rx input. In the transmitting mode, a diode which is controlled so as to be in the conductive state, short-circuits the Rx input. The diode is arranged between the Rx input and a blocking capacitor connected to ground. Concurrently, a second diode connects the coupling capacitor and the inductor to a parallel resonator circuit. In the transmitting mode, the shunt diode must provide full receiver isolation because the λ/4-line is replaced by a single capacitor. Such a circuit arrangement is not designed for GSM and higher frequency applications. As the receiver isolation is insufficient, the current consumption is too high because the series connection of the diodes is replaced by a parallel connection.

US Patent 6,249,670 discloses a dual band switching circuit for switching digital signals according to one standard and analogue or digital signals according to another standard by way of a common input/output terminal to a single antenna. Resonant circuits and/or impedance transforming circuits are used to separate electrically the circuitry for handing the digital signals according to the one standard from the circuitry for handling the analogue or digital signals. PIN diodes are provided and are rendered conductive to enable the digital signals according to the one standard to be transmitted by way of the antenna. In all other modes of operation of the dual band switching circuit the PIN diodes are non-conductive and impedance transforming devices are used to pass wanted signals and block unwanted signals.

It is an object of the invention to provide a RF signal switch circuit device for wireless communications applications and a wireless communication device which allows a better passive integration of the RF signal switch circuit and maintains sufficient functionality in providing low insertion loss and high isolation for a passive integrated receive-transmit circuit.

According to a first aspect of the present invention there is provided a RF signal switch circuit device having an input/output (I/O) terminal for connection to means for receiving/transmitting a signal, respectively, a transmitter (Tx) input terminal) for connection to a source of signals for transmission, a first diode having a first electrode coupled to the Tx input terminal and a second electrode coupled to the I/O terminal, and a receiver (Rx) output terminal for connection to a receiver, the Rx output terminal being coupled to the I/O terminal, characterised in the Rx output terminal is coupled to the I/O terminal by a parallel inductance-capacitance circuit, in that the parallel inductance-capacitance circuit comprises first and second branches connected in parallel between first and second nodes, in that the first branch comprises a capacitance connected between the first and second nodes, in that the second branch comprises an inductance having a first terminal connected to the first node and a second terminal connected to a first electrode of a second diode and to the Rx output terminal, a second electrode of the second diode being connected to the second node, in that the first node is connected to a junction of the I/O terminal and the second electrode of the first diode, in that the second node is connected to a first electrode of a third diode, a second electrode of which is coupled to ground, and in that a DC source switchable between a transmit condition and a receive condition is coupled to a junction of the Tx input terminal and the first electrode of the first diode, whereby in a transmit condition the DC source renders the first, second and third diodes conductive causing the device to present a high impedance and in a receive condition the first, second and third diodes are non-conductive causing the device to present a low impedance.

The RF signal switch circuit device in accordance with the invention advantageously enables a low insertion loss and a high isolation to be obtained for a passive integrated receive-transmit switch circuit. The advantages of a low insertion loss and a high isolation additionally facilitate the fabrication of the circuit as a RF power module. This will also reduce the cost of manufacturing the devices. A further advantage of the circuit of the invention is that there is no trade-off situation between insertion loss and isolation as it is the case with a λ/4-resonator in accordance with the state of the art. Therefore, the required isolation of the Rx channel can be readily obtained. Also miniaturization of the RF front-end power amplifies circuit is proposed due to the improved integration possibilities of the passive components of the circuit as compared to the situation with conventional Tx/Rx switch circuits.

According to a second aspect of the present invention there is provided a wireless communication device comprising in combination a RF signal switch circuit device in accordance with a first aspect of the present invention, an antenna, a high- and low- pass filter coupled between the antenna and the I/O terminal, a RF transmitter coupled to the Tx input terminal and a RF receiver coupled to the Rx output terminal.

In an embodiment of the RF signal switch circuit device the inductance of the parallel inductance-capacitance circuit is coupled between the Tx input terminal and the Rx output terminal and through a second diode to ground. A capacitive element of the parallel inductance capacitance circuit is coupled between the I/O terminal and the second node which in the transmitting mode is connected to ground by the third diode. In this arrangement, the capacitive element of the circuit is floating in the off-state (Rx mode) white the small inductance in the inductive element ensures low insertion losses. In the on-state (Tx mode) the resonator consisting of the parallel inductance-capacitance circuit greatly improves the isolation of the Rx channel and does fulfill the isolation requirements for this channel.

If desired, the parallel inductance-capacitance circuit may be tunable. By using a tunable resonator circuit instead of a fixed λ/4-resonator, it is possible to obtain higher isolation while maintaining a low insertion loss.

The parallel inductance-capacitance circuit may be switchable between pre-selected resonance values. This circuit has the same advantages as the circuit mentioned above that comprises a tunable resonator circuit and, additionally, makes it possible to have preselected resonance values that have been found to be advantageous for the operation of the circuit.

The inductance-capacitance circuit may be dimensioned so as to provide an impedance that is at least 20 times the impedance of the inductor. The possibility of designing the resonator circuit such that the impedance is at least twenty times the impedance of the inductor alone provides for the required isolation between Rx and Tx while said resonator circuit can be easily integrated into the module.

The components of the RF signal switch circuit device may be embodied in LTCC technology. Using LTCC (low temperature co-fired ceramic) multilayer technology, it is possible to increase the integration level of the power amplifier switch circuit to an extremely high degree and subsequently integrate front-end functionality.

The circuit may comprise a matched 50 Ohm circuit which promotes the trend towards small matched units.

In an embodiment of the RF signal switch circuit device the first, second and third diodes are PIN diodes providing for improved integration and functionality.

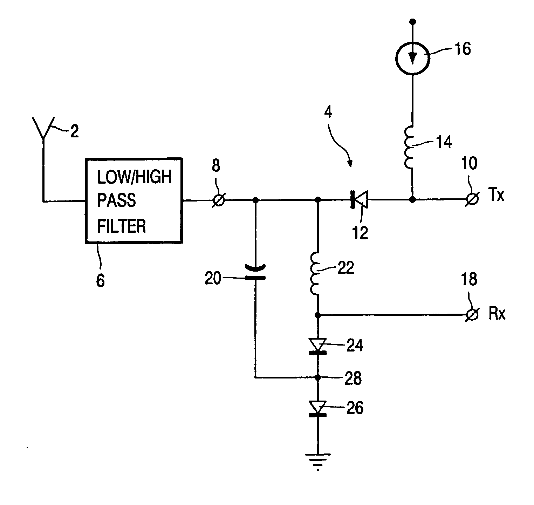

An embodiment of the present invention will now be described, by way of example, with reference to the single figure of the accompanying drawing. The single figure illustrates schematically the RF signal switch circuit device in accordance with the present invention in a wireless communications device.

The circuit in the figure comprises an antenna 2 which is connected to the switch circuit 4 by means of a low- and high pass filter 6. The switch circuit 4 has an I/O terminal 8 for receiving a RF signal from the antenna 2 and transmitting a RF signal to the antenna 2 respectively. A Tx input terminal 10 is connected to the I/O terminal 8 through a diode 12 and to a signal input for the signal to be transmitted, for instance a RF amplifier. The Tx input terminal 10 is further connected through an impedance 14 to a DC source 16. A Rx output terminal 18 is coupled to the I/O terminal 8 and to a RF receiver.

A resonator circuit comprising a tunable capacitor 20 and an inductor 22 and a diode 24 is provided where the inductor 22 and the diode 24 are connected in series. The series arrangement of the inductor 22 and the diode 24 is connected in parallel with the capacitor 20. The inductor 22 is also connected between the Tx input terminal 10 and the Rx output terminal 18 and through the diode 24 to ground. The inductor 22 is, more specifically, connected to the TQ input terminal 10 through diode 12 which provides isolation of the Tx input terminal 10 in the transmit mode.

Finally, a diode 26 is provided between the resonator circuit and ground, more specifically between node 28 and ground. The diodes in the above circuit are PIN diodes.

RF power modules for GSM, DCS, and PCS cellular communication have evolved into smaller matched 50 Ohm units. A logical step in the evolution of PA (Power Amplifier)-modules is the passive integration of RF functions, which will further reduce the overall solution cost of manufacturers of for instance cellular phones or other wireless communication devices. Using a known LTCC multilayer technology, it is possible to increase the integration level of the PA-module to an extreme high degree and subsequently integrate front-end functionality. The RF design of a front-end PA module typically uses a low- and high pass filter topology with in-cit=rcuit discrete current controlled PIN diodes. A conventional RF switch circuit comprises a first PIN diode connected with its anode to the output of a RF transmitter and its cathode via the low- and high pass filter to the RF antenna. The conventional RF switch circuit further comprises a quarter wave length resonator with two terminals of which one is connected via the low- and high pass filter to the RF antenna and the other terminal is connected to both the input of a RF receiver and the anode of a second PIN diode which by its cathode is connected to ground.

Passive integration of the known RF switch circuit is difficult, since a trade-off has to be made between the isolation between the RF transmitter and the RF receiver provided by the quarter wave length resonator and the insertion losses the quarter wave length resonator introduces. Due to this trade-off it is difficult to meet the specification of the Rx channel as required by above mentioned standards. By utilizing the tunable or switchable parallel LC resonator instead of a quarter wave length resonator it is possible to achieve a higher isolation while maintaining low insertion losses in a passive integrated RF switch circuit.

The RF switch circuit according to the invention comprising three PIN diodes 12, 24, 26 and the inductor 22 shunted by the capacitor 20 has a low impedance in the receive mode and presents a high impedance in the transmit mode. In the receive mode capacitor 22 is floating, since the PIN diodes 12, 24, 26 are non-conductive. The transmitter is isolated from the antenna 2 by PIN diode 12. The small inductor 22, which may be formed by for instance a bond wire, fulfills the low insertion loss requirement. In the transmit mode the conducting state of the PIN diodes 12, 24, 26, the parallel LC resonator comprising capacitor 20, inductor 22, and diode 24 enhances the inductor impedance approximately 20 times providing the isolation requirement of the receive channel.

The low- and high pass filter 6 between the switch circuit and the antenna 2 is required in multi-band PA modules to satisfy the overall front-end isolation requirements.

An advantage of a wireless communication device, as for instance a cellular phone, comprising the RF switch circuit according to the invention is that it has smaller dimensions, because the RF switch circuit is realized by means of a passive integrated circuit. A further advantage of a wireless communication device comprising the RF switch circuit according to the invention is that it has a lower cost price, since the passive integrated RF switch circuit is cheaper and easier to handle during production than a conventional RF switch circuit built-up of discrete components.

It will be understood that the above description is intended to be illustrative and not restrictive. Many embodiments will be apparent to those skilled in the art upon reviewing the above description. The scope of the invention should, therefore, be determined not with reference to the above description, but with reference to the appended claims

## Claims

1. A RF signal switch circuit device having an input/output (I/O) terminal (8) for connection to means for receiving/transmitting a signal, respectively, a transmitter (Tx) input terminal (10) for connection to a source of signals for transmission, a first diode (12) having a first electrode coupled to the Tx input terminal and a second electrode coupled to the I/O terminal, and a receiver (Rx) output terminal (18) for connection to a receiver, the Rx output terminal being coupled to the I/O terminal, **characterised in** the Rx output terminal is coupled to the I/O terminal by a parallel inductance-capacitance circuit, **in that** the parallel inductance-capacitance circuit comprises first and second branches connected in parallel between first and second nodes, **in that** the first branch comprises a capacitance (20) connected between the first and second nodes, **in that** the second branch comprises an inductance (22) having a first terminal connected to the first node and a second terminal connected to a first electrode of a second diode (24) and to the Rx output terminal, a second electrode of the second diode being connected to the second node, **in that** the first node is connected to a junction of the I/O terminal and the second electrode of the first diode, **in that** The second node is connected to a first electrode of a third diode (26), a second electrode of which is coupled to ground, and **in that** a DC source (16) switchable between a transmit condition and a receive condition is coupled to a junction of the Tx input terminal (10) and the first electrode of the first diode (12), whereby in a transmit condition the DC source renders the first, second and third diodes conductive causing the device to present a high impedance and in a receive condition the first, second and third diodes are non-conductive causing the device to present a low impedance.

2. A device as claimed in claim 1, **characterised in that** the first, second and third diodes are PIN diodes.

3. A device as claimed in claims 1 or 2, **characterised in that** the parallel inductance-capacitance circuit is tunable.

4. A device as claimed in claim 1 or 2, **characterised in that** the parallel iriductance-capacitance circuit is switchable between pre-selected resonance values

5. A device as claimed in claim 1 or 2, **characterised in that** the parallel inductance-inductance is dimensioned to provide an impedance at least 20 times the impedance of the inductor (22).

6. A device as claimed in any one of claims 1 to 5, **characterised in that** the components of the RF signal switch circuit device are embodied in LTCC technology.

7. A wireless communications device comprising, in combination, a RF signal switch circuit device as claimed in any one of claims 1 to 6, an antenna (2), a high- and low pass filter (6) coupled between the antenna and the I/O terminal (8), a RF transmitter coupled to the Tx input terminal (10) and a RF receiver coupled to the Rx output terminal (18).

## Patentansprüche

1. Eine HF-Signalschaltkreisvorrichtung hat
ein Input/Ouput-(I/O)-Terminal (8) für ein Verbinden zu Mitteln zum Empfangen bzw. Senden eines Signals,
ein Sende-(Tx)-Input-Terminal (10) zum Verbinden mit einer Quelle von zu übertragenden Signalen,
eine erste Diode (12), die eine erste Elektrode, welche mit dem Tx-Input-Terminal gekoppelt ist, und eine zweite Elektrode hat, welche mit dem I/O-Terminal gekoppelt ist, und
ein Empfangs-(Rx)-Output-Terminal (18) zum Verbinden mit einem Empfänger, wobei das Rx-Output-Terminal mit dem I/O-Terminal gekoppelt ist,
**dadurch gekennzeichnet,**
**dass** das Rx-Output-Terminal mit dem I/O-Terminal mittels eines parallelen induktiv-kapazitiv Schaltkreises gekoppelt ist,
**dass** der parallele induktiv-kapazitiv Schaltkreis einen ersten und zweiten Zweig aufweist, welche parallel zwischen einem ersten und zweiten Knoten verbunden sind,
**dass** der erste Zweig eine Kapazität (20) aufweist, welche zwischen dem ersten und dem zweiten Knoten geschaltet ist,
**dass** der zweite Zweig eine Induktivität (22) aufweist, die ein erstes Terminal hat, das mit dem ersten Knoten verbunden ist, und ein zweites Terminal hat, das mit einer ersten Elektrode einer zweiten Diode (24) und mit dem Rx-Output-Terminal verbunden ist, wobei eine zweite Elektrode der zweiten Diode mit dem zweiten Knoten verbunden ist,
**dass** der erste Knoten mit einer Kontaktstelle des I/O-Terminals und der zweiten Elektrode der ersten Diode verbunden ist,
**dass** der zweite Knoten mit einer ersten Elektrode einer dritten Diode (26) verbunden ist, von der eine zweite Elektrode mit Masse gekoppelt ist, und
**dass** eine DC-Quelle (16), welche zwischen einem Sendezustand und einem Empfangszustand umschaltbar ist, mit einer Kontaktstelle des Tx-Input-Terminals (10) und der ersten Elektrode der ersten Diode (12) gekoppelt ist, wodurch in einem Sendezustand die DC-Quelle die erste, zweite und dritte Diode leitend macht, was bewirkt, dass die Vorrichtung eine hohe Impedanz zeigt, und in einem Empfangszustand die erste, zweite und dritte Diode nicht-leitend sind, was bewirkt, dass die Vorrichtung eine niedrige Impedanz zeigt.

2. Eine Vorrichtung nach Anspruch 1, **dadurch gekennzeichnet, dass** die erste, zweite und dritte Diode PIN Dioden sind.

3. Eine Vorrichtung nach den Ansprüchen 1 oder 2, **dadurch gekennzeichnet, dass** der parallele induktiv-kapazitiv Schaltkreis tunebar ist.

4. Eine Vorrichtung nach den Ansprüchen 1 oder 2, **dadurch gekennzeichnet, dass** der parallel induktiv-kapazitiv Schaltkreis zwischen vorausgewählten Resonanzwerten umschaltbar ist.

5. Eine Vorrichtung nach den Ansprüchen 1 oder 2, **dadurch gekennzeichnet, dass** der parallel induktiv-kapazitiv Schaltkreis dimensioniert ist, um eine Impedanz von zumindest einem 20-fachen der Impedanz der Induktivität (20) bereitzustellen.

6. Eine Vorrichtung nach einem der Ansprüche 1 bis 5, **dadurch gekennzeichnet, dass** die Komponenten der HF-Signalschaltkreisvorrichtung in LTCC-Technologie ausgeführt sind.

7. Eine Drahtlos-Kommunikationsvorrichtung, welche in Kombination aufweist, eine HF-Signalschaltkreisvorrichtung nach einem der Ansprüche 1 bis 6, eine Antenne (2), ein Hoch- und Tiefpassfilter (6), welches zwischen der Antenne und dem I/O-Terminal (8) gekoppelt ist, einen HF-Sender, welcher mit dem Tx-Input-Terminal (10) gekoppelt ist und einen HF-Empfänger, welcher mit dem Rx-Output-Terminal (18) gekoppelt ist.

## Revendications

1. Dispositif de circuit de commutation de signal RF ayant une borne d'entrée/sortie (E/S) (8) pour le raccordement aux moyens de réception et d'émission d'un signal, respectivement, une borne d'entrée d'émetteur Tx (10) pour le raccordement à une source de signaux en vue de l'émission, une première diode (12) ayant une première électrode raccordée à la borne d'entrée Tx et une deuxième électrode raccordée à la borne d'E/S, et une borne de sortie de récepteur Rx (18) pour le raccordement à un récepteur, la borne de sortie Rx étant raccordée à la borne d'E/S, **caractérisé en ce que** la borne de sortie Rx est raccordée à la borne d'E/S par un circuit parallèle inductance-condensateur, **en ce que** le circuit parallèle inductance-condensateur comporte une première branche et une deuxième branche raccordées en parallèle entre un premier noeud et un deuxième noeud, **en ce que** la première branche comporte un condensateur (20) raccordé entre le premier noeud et le deuxième noeud, **en ce que** la deuxième branche comporte une inductance (22) ayant une première borne raccordée au premier noeud et une deuxième borne raccordée à une première électrode d'une deuxième diode (24), et la borne de sortie Rx, une deuxième électrode de la deuxième diode étant raccordée au deuxième noeud, **en ce que** le premier noeud est raccordé à une jonction de la borne d'E/S et de la deuxième électrode de la première diode, **en ce que** le deuxième noeud est raccordé à une première électrode d'une troisième diode (26), dont la deuxième électrode est raccordée à la masse, et qu'une source de tension continue (16) commutable entre une condition d'émission et une condition de réception est raccordée à une jonction entre la borne d'entrée Tx (10) et la première électrode de la première diode (12), grâce à quoi dans une condition d'émission, la source de tension continue rend conductrices les première, deuxième et troisième diodes, faisant que le dispositif présente une impédance élevée et, dans une condition de réception, rend non conductrices les première, deuxième et troisième diodes, faisant que le dispositif présente une impédance faible.

2. Dispositif selon la revendication 1, **caractérisé en ce que** les première, deuxième et troisième diodes sont des diodes PIN.

3. Dispositif selon les revendications 1 ou 2, **caractérisé en ce que** le circuit inductance-condensateur parallèle est accordable.

4. Dispositif selon les revendications 1 ou 2, **caractérisé en ce que** le circuit inductance-condensateur parallèle est commutable entre des valeurs de résonance présélectionnées.

5. Dispositif selon les revendications 1 ou 2, **caractérisé en ce que** le circuit inductance-condensateur parallèle est dimensionné de manière à offrir une impédance au moins 20 fois supérieure à l'impédance de l'inductance (22).

6. Dispositif selon l'une quelconque des revendications 1 à 5, **caractérisé en ce que** les composants du circuit de commutation du signal RF sont intégrés dans une technologie LTCC.

7. Dispositif de communication sans fil comprenant, en combinaison, un dispositif de commutation du signal RF selon l'une quelconque des revendications 1 à 6, une antenne (2), un filtre passe-haut et passe-bas (6) raccordé entre l'antenne et la borne d'entrée/sortie (8), un émetteur RF raccordé à la borne d'entrée Tx (10) et un récepteur RF raccordé à la borne de sortie Rx (18).
